# EUROPÄISCHE PATENTSCHRIFT

(11) **EP 2 500 580 B1**
(45) Veröffentlichungstag und Bekanntmachung des Hinweises auf die Patenterteilung: **19.08.2020**
(21) Anmeldenummer: 12151506.8
(22) Anmeldetag: 18.01.2012
(51) Int. Cl.: F01D 5/04, F04D 27/00, F04D 29/02, F04D 29/28, F04D 29/32, G01P 3/487, G01P 3/488

(54) **VERDICHTERRAD, VORRICHTUNG ZUM ERFASSEN DER DREHZAHL, VERFAHREN ZUR HERSTELLUNG**
COMPRESSOR WHEEL, DEVICE FOR DETECTING SPEED, PRODUCTION METHOD
ROUE DE COMPRESSEUR, DISPOSITIF DE DÉTECTION DE LA VITESSE DE ROTATION, PROCÉDÉ DE FABRICATION

(30) Priorität: 18.03.2011 DE 102011005806
(43) Veröffentlichungstag der Anmeldung: 19.09.2012
(73) Patentinhaber: Robert Bosch GmbH, 70442 Stuttgart (DE)
(72) Erfinder: Kassner, Uwe, 71696 Moeglingen (DE)

(56) Entgegenhaltungen:
- EP-A2- 2 159 379
- DE-A1- 19 623 236
- DE-A1-102006 021 430
- DE-A1-102007 005 769
- DE-A1-102007 036 936
- DE-A1-102009 027 853

## Beschreibung

Die Erfindung betrifft ein Verdichterrad für eine Vorrichtung zum Erfassen einer Drehzahl eines Turboladers, insbesondere Abgasturbolader eines Kraftfahrzeugs, mit einem mehrere Verdichterschaufeln aufweisenden Grundkörper.

Ferner betrifft die Erfindung eine Vorrichtung zum Erfassen der Drehzahl eines Turboladers, insbesondere eines Abgasturboladers eines Kraftfahrzeugs, mit einem mehrere Verdichterschaufeln aufweisenden Verdichterrad des Turboladers und mit einem Sensor zur Erfassung von durch das rotierende Verdichterrad erzeugten Wirbelströmen.

Weiterhin betrifft die Erfindung ein Verfahren zur Herstellung eines Verdichterrads einer Vorrichtung zum Erfassen der Drehzahl eines Turboladers, insbesondere Abgasturboladers eines Kraftfahrzeugs, insbesondere eines Turboladers wie er oben beschrieben wurde.

### Stand der Technik

Verdichterräder, Vorrichtungen zum Erfassen der Drehzahl eines Turboladers sowie Verfahren zur Herstellung eines Verdichterrads einer Vorrichtung zum Erfassen der Drehzahl eines Turboladers sind aus dem Stand der Technik bekannt. So offenbart beispielsweise die deutsche Offenlegungsschrift DE 196 23 236 A1 ein Verfahren sowie eine Vorrichtung zum Erfassen der Drehzahl eines Turboladers, bei welchem die Drehzahl eines Verdichterrads eines Turboladers durch Erfassen von Wirbelströmen bestimmt wird. Dazu ist das Verdichterrad in einem Gehäuse des Turboladers angeordnet und beabstandet zu dem Verdichterrad ein Sensor vorgesehen, der ein konstantes Magnetfeld erzeugt, durch welches bei einer Rotation des Verdichterrades die Verdichterschaufeln bewegt werden, wodurch Wirbelströme erzeugt werden, die einen Strom in eine Spule induzieren, die radial beabstandet zu dem Verdichterrad angeordnet ist. Durch die Änderung des Induktionsstroms wird dabei auf die Drehzahl des Verdichterrads geschlossen. Dabei ist vorgesehen, dass das Verdichterrad als nicht-magnetisches Metallrad ausgebildet ist. Metallische Verdichterräder haben jedoch den Nachteil eines hohen Trägheitsmoments, das ein schnelles Ansprechen des Verdichters des Turboladers erschwert. Die Offenlegungsschrift DE 10 2007 005 769 A1 beschreibt eine Drehzahlerfassungseinrichtung für ein Verdichterrad eines Abgasturboladers. Dabei werden in einer Verdichterschaufel des Verdichterrades durch einen Permanentmagneten Wirbelströme erzeugt, die durch eine Sensorschaltung erfassbar sind. Die Druckschrift DE 10 2007 036 936 A1 betritt darüber hinaus einen Abgasturbolader mit einem in einem Gehäuse gelagerten Verdichterrad, welches Verdichterradschaufeln aufweist. Dabei ist ein Sensor, beispielweise ein induktiver Sensor vorgesehen, welcher eine translatorische und/oder rotatorische Bewegung der Verdichterradschaufeln erfasst.

### Offenbarung der Erfindung

Die Erfindung hat den Vorteil, dass ein Verdichterrad und somit ein Turbolader mit einem geringeren Trägheitsmoment geboten wird, und dennoch das Erfassen der Drehzahl auf Basis des bekannten Prinzips erfolgen kann. Dazu ist erfindungsgemäß vorgesehen, dass das Verdichterrad aus einem Kunststoff gefertigt ist und mindestens eine bereichsweise Metallisierung aufweist. Vorzugsweise weist das Verdichterrad über seinen Umfang verteilt mehrere Metallisierungen auf. Durch die Ausbildung des Verdichterrads aus Kunststoff sind das Verdichterrad sowie die daran insbesondere einstückig ausgebildeten Verdichterschaufeln aus einem vergleichsweise leichten Material gefertigt, wodurch das Trägheitsmoment des Verdichterrads verringert wird. Dadurch, dass wenigstens eine bereichsweise Metallisierung vorgesehen ist, werden dennoch Wirbelströme in einem Magnetfeld der Vorrichtung zum Erfassen der Drehzahl des Turboladers erzeugt, die detektiert und somit zur Bestimmung der Drehzahl genutzt werden können. Zweckmäßigerweise sind die mehreren Metallisierungen gleichmäßig über den Umfang des Verdichterrads verteilt angeordnet. Die eine oder mehreren Metallisierungen können dabei beispielsweise an dem Grundkörper des Verdichterrads, insbesondere an dessen Außenrand, vorgesehen sein. Durch Vorsehen lediglich einer Metallisierung beziehungsweise eines metallisierten Bereichs ergibt sich im Vergleich zum Stand der Technik mit einem metallischen Verdichterrad eine reduzierte Signalfrequenz, die auch reduzierte Anforderungen an die Signalauswertung stellt. Insbesondere um niedrige Drehzahlen zu erfassen, ist vorgesehen, dass mehrere Metallisierungen an dem Verdichterrad vorgesehen sind.

Besonders bevorzugt ist die wenigstens eine Metallisierung an einer der Verdichterschaufeln angeordnet, insbesondere an deren (radialem) Außenrand. Die Verdichterschaufeln weisen in axialer Erstreckung des Verdichterrads gesehen eine größere Fläche als der Grundkörper auf, die zur Erzeugung der Wirbelströme genutzt wird, sodass ein sicheres Erfassen der Wirbelströme beziehungsweise der Drehzahl des Verdichterrads gewährleistet ist.

Sind mehrere Metallisierungen vorgesehen, sind diese bevorzugt ebenfalls an den Verdichterschaufeln angeordnet. Um eine gleichmäßige Verteilung der Metallisierungen über den Umfang des Verdichterrads zu erhalten, sind die Metallisierungen beispielsweise an jeder zweiten, dritten oder vierten Verdichterschaufel vorgesehen. Gemäß einer vorteilhaften Weiterbildung der Erfindung weist jede der Verdichterschaufeln einen metallisierten Bereich auf. Die Verdichterschaufeln sind in der Regel gleichmäßig beabstandet zueinander angeordnet, sodass durch Vorsehen metallisierter Bereiche an jeder oder jeder zweiten, dritten oder vierten Verdichterschaufel automatisch auch in Umfangsrichtung gesehen gleichmäßig zueinander beabstandete metallisierte Bereiche ausgebildet sind. Besonders bevorzugt ist der Außenrand der jeweiligen Verdichterschaufel metallisiert. Unter dem Außenrand ist hierbei die radiale Außenkante der jeweiligen Schaufel zu verstehen, wobei sich der metallisierte Bereich vorzugsweise derart weit in die Verdichterschaufel hinein erstreckt, also radial nach innen verläuft, dass ein sicheres Detektieren der Wirbelströme gewährleistet ist.

Erfindungsgemäß weist der Kunststoff einen durch Energieeinbringung zur Bildung der Metallisierung bereichsweise aktivierbaren, metallorganischen Komplex auf. Das bedeutet, dass der Kunststoff einen Wirkstoff beziehungsweise ein Additiv enthält, das erst nach der Formgebung des Verdichterrads aktiviert werden kann, um erst dann die metallisierten Bereiche beziehungsweise Metallisierungen zu bilden. Dadurch ist es möglich, das Verdichterrad auf einfache Art und Weise, beispielsweise durch ein Spritzgussverfahren, herzustellen, und anschließend die Metallisierung(en) durch bereichsweises Aktivieren des metallorganischen Komplexes herzustellen. Besonders bevorzugt ist der metallorganische Komplex durch Laserbestrahlung aktivierbar. Alternativ ist es natürlich auch denkbar, in das Verdichterrad metallische Elemente nachträglich einzuarbeiten, beispielsweise durch Einlegen oder Auflegen entsprechender metallischer Streifen.

Vorzugsweise ist der aktivierte Bereich mit einer zusätzlichen Metallbeschichtung versehen. Durch die Energiebeaufschlagung des metallorganischen Komplexes werden Metallatome abgespalten und dienen als Keime für eine erste Metallisierung, beispielsweise durch Abscheidung von Kupfer. Auf diese Metallisierung können dann weitere Metalle beziehungsweise dickere Schichten, beispielsweise durch Verwendung eines galvanischen Bades, aufgebracht werden. Hierdurch lässt sich die Wirkung der Metallisierung erhöhen und damit die Genauigkeit der Drehzahlerfassung verbessern.

Die erfindungsgemäße Vorrichtung zum Erfassen der Drehzahl eines Turboladers zeichnet sich durch die Ausbildung des Verdichterrads aus, wie es oben beschrieben wurde. Als Sensor ist vorzugsweise die Kombination eines Magneten und einer Spule vorgesehen, wobei der Magnet das konstante Magnetfeld erzeugt, durch welches das Verdichterrad, insbesondere die Verdichterschaufeln des Verdichterrads, hindurch bewegt werden, und wobei durch die Bewegung des Verdichterrads Wirbelströme erzeugt werden, die ein Wechselmagnetfeld erzeugen, wobei durch das wechselnde Magnetfeld sich eine Wechselspannung in der Induktionsspule einstellt, deren Frequenz gleich dem Produkt aus Verdichterdrehzahl und der Anzahl der Verdichterschaufeln ist. Besonders bevorzugt ist als Magnet ein Permanentmagnet vorgesehen.

Das erfindungsgemäße Verfahren zur Herstellung des Verdichterrads, insbesondere einer Vorrichtung zum Erfassen der Drehzahl eines Turboladers, zeichnet sich dadurch aus, dass das Verdichterrad mit mehreren Verdichterschaufeln aus einem Kunststoff hergestellt wird, und anschließend wenigstens eine, insbesondere an einer Verdichterschaufel angeordnete Metallisierung erzeugt wird. Vorzugsweise werden mehrere derartige Metallisierungen über den Umfang des Verdichterrads gleichmäßig verteilt erzeugt. Besonders bevorzugt werden die Verdichterschaufeln einstückig mit einem Grundkörper des Verdichterrads ausgebildet. Die Metallisierungen werden vorzugsweise an den Verdichterschaufeln angeordnet, wobei vorzugsweise jede der Verdichterschaufeln mit einer Metallisierung, vorzugsweise in Form eines Metallisierungsstreifens, versehen wird. Besonders bevorzugt werden die Metallisierungen an einem radialen Außenrand der jeweiligen Verdichterschaufel ausgebildet. Es ergeben sich hierdurch entsprechend die bereits zuvor beschriebenen Vorteile.

Erfindungsgemäß ist vorgesehen, dass das Verdichterrad aus einem Kunststoff mit einem metallorganischen Komplex hergestellt wird, sodass sich - wie zuvor beschrieben - die Metallisierungen nachträglich durch einfache Aktivierung des metallorganischen Komplexes an dem fertig geformten Verdichterrad erzeugen lassen.

Erfindungsgemäß wird der metallorganische Komplex zur Bildung der Metallisierung bereichsweise durch Energieeintrag, insbesondere durch Laserbestrahlung, aktiviert. Natürlich ist es aber auch denkbar, eine andere Art des Energieeintrags zu verwenden.

Weiterhin ist vorgesehen, dass bevorzugt das Verdichterrad nach der bereichsweisen Aktivierung des metallorganischen Komplexes in ein galvanisches Bad getaucht wird, um die aktivierten Bereiche mit einer zusätzlichen metallischen Beschichtung zu versehen. Hierbei ist also vorgesehen, dass nach einer Aktivierung des metallorganischen Komplexes, wodurch eine erste Metallisierung erzeugt wurde, diese Metallisierung durch Erzeugen einer metallischen Beschichtung gestärkt wird, wodurch sich stärkere Wirbelströme erzeugen lassen, um eine sichere Detektion der Drehzahl zu gewährleisten.

Im Folgenden soll die Erfindung anhand der Zeichnung näher erläutert werden. Dazu zeigen
- Figur 1: ein Ausführungsbeispiel eines vorteilhaften Verdichterrads in einer perspektivischen Darstellung und
- Figur 2: eine Vorrichtung zum Erfassen der Drehzahl eines Turboladers in einer vereinfachten Darstellung.

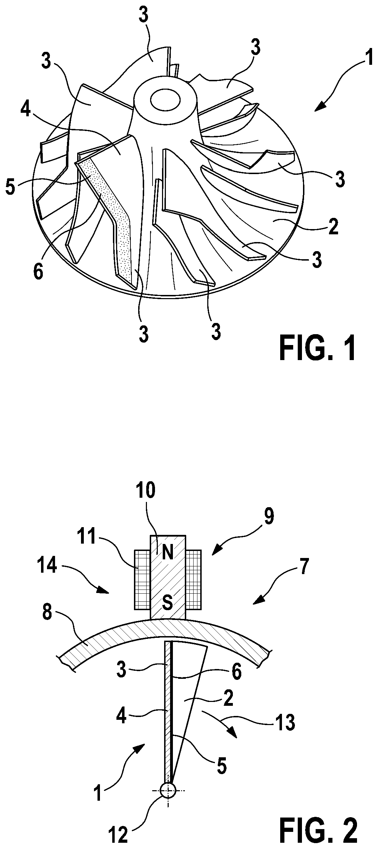

Figur 1 zeigt in einer perspektivischen Ansicht das Verdichterrad 1 eines hier nicht näher dargestellten Abgasturboladers. Das Verdichterrad 1 weist einen Grundkörper 2 sowie eine Vielzahl von gleichmäßig über den Umfang verteilt angeordneten Verdichterschaufeln 3 auf, die einstückig mit dem Grundkörper 2 ausgebildet sind. Das Verdichterrad 1 ist aus einem Kunststoff gefertigt, der als spezielles Additiv einen metallorganischen Komplex aufweist. Der diesen Komplex enthaltende Kunststoff wird vorzugsweise durch Spritzgießen in die Form des Verdichterrads 1 gebracht. Vorzugsweise handelt es sich bei dem Kunststoff um einen hochtemperaturfesten Kunststoff.

Durch Energieeintrag können die Metallatome gezielt aus dem Additiv beziehungsweise aus dem Komplex abgespalten werden und dienen dann als Keime für eine erste Metallisierung, beispielsweise durch Abscheidung von Kupfer. Vorliegend ist eine Verdichterschaufel 4 der Verdichterschaufeln 3 an ihrem Außenrand 5 durch Laserbestrahlung behandelt worden. Durch diesen Energieeintrag der Laserbestrahlung ist an dem Außenrand 5 eine Metallisierung 6 erzeugt worden. Vorteilhafterweise wird auf diese Metallisierung 6 anschließend in einem galvanischen Bad mindestens ein weiteres Metall beziehungsweise eine weitere Metallbeschichtung aufgebracht, die entsprechend an der Metallisierung 6 verbleibt, während das übrige Verdichterrad 1 eine Kunststoffoberfläche aufweist.

Figur 2 zeigt eine Vorrichtung 14 zum Erfassen der Drehzahl eines Turboladers 7 in einer vereinfachten Darstellung. Der Turbolader 7 umfasst das Verdichterrad 1, von dem vorliegend nur ein Kreissegment dargestellt ist. Das Verdichterrad 1 liegt innerhalb eines Gehäuses 8 des Turboladers 7. Außerhalb des Gehäuses 8 ist ein Sensor 9 zur Erfassung der Drehzahl des Verdichterrads 1 angeordnet. Der Sensor 9 umfasst im Wesentlichen einen Permanentmagneten 10 sowie eine Spule 11. Die Metallisierung 6 befindet sich somit an einer dem Permanentmagneten 10 beziehungsweise der Spule 11 zugewandten Kante der Verdichterschaufel 4.

Durch den Permanentmagneten 10 wird ein konstantes Magnetfeld erzeugt, durch welches die Verdichterschaufeln 3 des Verdichterrads 1 bewegt werden, wenn das Verdichterrad 1 um seine Drehachse 12 rotiert, wie durch einen Pfeil 13 angedeutet. Wird die Verdichterschaufel 4 mit der Metallisierung 6 durch das Magnetfeld bewegt, so entstehen Wirbelströme, die wiederum ein wechselndes Magnetfeld erzeugen. In der Spule 11 wird dadurch eine Wechselspannung induziert, deren Frequenz gleich dem Produkt aus Verdichterdrehzahl und der Anzahl der Metallisierung ist. Vorliegend entspricht also die Frequenz, da nur eine Metallisierung 6 vorgesehen ist, der Verdichterdrehzahl des Verdichterrads 1.

Da nur eine Verdichterschaufel 4 mit der Metallisierung 6 versehen ist, sind nur geringe Anforderungen an die Signalauswertung gestellt, wodurch der Abgasturbolader beziehungsweise die Vorrichtung 14 zum Erfassen der Drehzahl einfach und kostengünstig herstellbar ist, insbesondere im Vergleich zu einer Vorrichtung mit einem herkömmlichen Verdichterrad aus Metall. Für das hier angewandte Wirbelstrom-Messprinzip genügt eine sehr dünne Leiterschicht der Metallisierung 6. Das hat den Vorteil, dass die Metallisierung 6 eine vernachlässigbare Masse darstellt, die die Massensymmetrie des Verdichterrads 1 nicht oder kaum beeinflusst. Um das Massensymmetrie-Verhalten und auch die Messauflösung zu erhöhen, ist gemäß einer hier nicht dargestellten Weiterbildung vorgesehen, dass mehrere Verdichterschaufeln 3 des Verdichterrads 1 mit einer entsprechenden Metallisierung versehen sind. Zweckmäßigerweise sind die Metallisierungen dann gleichmäßig über den Umfang des Verdichterrads 1 angeordnet. Natürlich ist es auch denkbar, eine oder mehrere entsprechende Metallisierungen lediglich an dem Grundkörper 2 vorzusehen. Ebenso ist es denkbar, die Metallisierung 6 nicht durch Aktivieren eines metallorganischen Komplexes zu erzeugen, sondern durch anbringen von metallischen Elementen an das Verdichterrad 1.

Ist der Turbolader 7 als Abgasturbolader ausgebildet, so ist es auch denkbar, alternativ oder zusätzlich eine oder mehrere entsprechende Metallisierungen an einem aus Kunststoff gefertigten Turbinenrad vorzusehen, um die Drehzahl des Verdichterrads beziehungsweise des Verdichters zu erfassen.

## Patentansprüche

1. Verdichterrad (1) für eine Vorrichtung (14) zum Erfassen der Drehzahl eines Turboladers (7), insbesondere Abgasturbolader eines Kraftfahrzeugs, mit einem mehrere Verdichterschaufeln (3) aufweisenden Grundkörper (2), **dadurch gekennzeichnet, dass** das Verdichterrad (1) aus Kunststoff gefertigt ist und mindestens eine bereichsweise Metallisierung (6) aufweist, wobei der Kunststoff einen durch Energieeinbringung zur Bildung der Metallisierung (6) bereichsweise aktivierbaren, metallorganischen Komplex aufweist.

2. Verdichterrad nach Anspruch 1, **dadurch gekennzeichnet, dass** die mindestens eine Metallisierung (6) an einer der Verdichterschaufeln (3), insbesondere an deren Außenrand (5) angeordnet ist.

3. Verdichterrad nach einem der vorhergehenden Ansprüche, **dadurch gekennzeichnet, dass** mehrere Metallisierungen (6) gleichmäßig über den Umfang des Verdichterrads (1) angeordnet sind.

4. Verdichterrad nach einem der vorhergehenden Ansprüche, **dadurch gekennzeichnet, dass** die Metallisierung (6) mit einer zusätzlichen Metallbeschichtung versehen ist.

5. Vorrichtung (14) zum Erfassen der Drehzahl eines Turboladers (7), insbesondere Abgasturboladers eines Kraftfahrzeugs, mit einem mehrere Verdichterschaufeln (3) aufweisenden Verdichterrad (1) des Turboladers (7) und mit einem Sensor (9) zur Erfassung von durch das rotierende Verdichterrad (1) erzeugten Wirbelströmen, **gekennzeichnet durch** die Ausbildung des Verdichterrads nach einem oder mehreren der vorhergehenden Ansprüche.

6. Verfahren zur Herstellung eines Verdichterrads (1), insbesondere für eine Vorrichtung (14) zum Erfassen der Drehzahl eines Turboladers (7), insbesondere Abgasturbolader eines Kraftfahrzeugs, insbesondere nach einem oder mehreren der vorhergehenden Ansprüche, mit folgenden Schritten:
- Herstellen des Verdichterrads (1) mit mehreren Verdichterschaufeln (3) aus einem Kunststoff,
- Erzeugen mindestens einer, insbesondere an einer der Verdichterschaufeln (3) angeordneten Metallisierung (6), wobei das Verdichterrad (1) aus einem Kunststoff mit einem metallorganischen Komplex hergestellt wird, und wobei der metallorganische Komplex zur Bildung der Metallisierung (6) bereichsweise durch Energieeintrag aktiviert wird.

7. Verfahren nach Anspruch 6, **dadurch gekennzeichnet, dass** der metallorganische Komplex zur Bildung der Metallisierung (6) bereichsweise durch Laserbestrahlung aktiviert wird.

8. Verfahren nach einem der vorhergehenden Ansprüche 6 oder 7, **dadurch gekennzeichnet, dass** das Verdichterrad (1) nach der bereichsweisen Aktivierung des metallorganischen Komplexes in ein galvanisches Bad getaucht wird, um die Metallisierung (6) mit einer zusätzlichen metallischen Beschichtung zu versehen.

## Claims

1. Compressor impeller (1) for an apparatus (14) for the detection of the rotational speed of a turbocharger (7), in particular an exhaust gas turbocharger of a motor vehicle, having a main body (2) which has a plurality of compressor blades (3), **characterized in that** the compressor impeller (1) is manufactured from plastic and has at least one metallization (6) in regions, the plastic having an organometallic complex which can be activated in regions by way of the application of energy in order to form the metallization (6).

2. Compressor impeller according to Claim 1, **characterized in that** the at least one metallization (6) is arranged on one of the compressor blades (3), in particular on the outer edge (5) thereof.

3. Compressor impeller according to either of the preceding claims, **characterized in that** a plurality of metallizations (6) are arranged uniformly over the circumference of the compressor impeller (1).

4. Compressor impeller according to one of the preceding claims, **characterized in that** the metallization (6) is provided with an additional metal coating.

5. Apparatus (14) for the detection of the rotational speed of a turbocharger (7), in particular an exhaust gas turbocharger of a motor vehicle, having a compressor impeller (1) of the turbocharger (7), which compressor impeller (1) has a plurality of compressor blades (3), and having a sensor (9) for the detection of eddy currents which are generated by way of the rotating compressor impeller (1), **characterized by** the configuration of the compressor impeller according to one or more of the preceding claims.

6. Method for the production of a compressor impeller (1), in particular for an apparatus (14) for the detection of the rotational speed of a turbocharger (7), in particular an exhaust gas turbocharger of a motor vehicle, in particular according to one or more of the preceding claims, having the following steps:
- production of the compressor impeller (1) having a plurality of compressor blades (3) from a plastic,
- generation of at least one metallization (6) which is arranged, in particular, on one of the compressor blades (3), the compressor impeller (1) being produced from a plastic with an organometallic complex, and the organometallic complex being activated in regions by way of the application of energy in order to form the metallization (6).

7. Method according to Claim 6, **characterized in that** the organometallic complex is activated in regions by way of laser irradiation in order to form the metallization (6) .

8. Method according to either of the preceding Claims 6 and 7, **characterized in that**, after the activation of the organometallic complex in regions, the compressor impeller (1) is dipped into a galvanic bath, in order to provide the metallization (6) with an additional metallic coating.

## Revendications

1. Roue de compresseur (1) pour un dispositif (14) pour détecter la vitesse de rotation d'un turbocompresseur (7), en particulier d'un turbocompresseur à gaz d'échappement d'un véhicule automobile, comprenant
un corps de base (2) présentant plusieurs pales de compresseur (3),
**caractérisée en ce que** la roue de compresseur (1) est fabriquée en plastique et présente au moins une métallisation par parties (6), le plastique présentant un complexe organométallique activable par parties par apport d'énergie pour former la métallisation (6).

2. Roue de compresseur selon la revendication 1, **caractérisée en ce que** l'au moins une métallisation (6) est disposée au niveau de l'une des pales de compresseur (3), en particulier au niveau de son bord extérieur (5).

3. Roue de compresseur selon l'une quelconque des revendications précédentes, **caractérisée en ce que** plusieurs métallisations (6) sont réparties uniformément sur la périphérie de la roue de compresseur (1).

4. Roue de compresseur selon l'une quelconque des revendications précédentes, **caractérisée en ce que** la métallisation (6) est pourvue d'un revêtement métallique supplémentaire.

5. Dispositif (14) pour détecter la vitesse de rotation d'un turbocompresseur (7), en particulier d'un turbocompresseur à gaz d'échappement d'un véhicule automobile, comprenant une roue de compresseur (1) du turbocompresseur (7) présentant plusieurs pales de compresseur (3) et un capteur (9) pour détecter des courants de Foucault générés par la roue de compresseur (1) en rotation, **caractérisé par** la réalisation de la roue de compresseur selon l'une quelconque ou plusieurs des revendications précédentes.

6. Procédé de fabrication d'une roue de compresseur (1), en particulier pour un dispositif (14) pour détecter la vitesse de rotation d'un turbocompresseur (7), en particulier d'un turbocompresseur à gaz d'échappement d'un véhicule automobile, en particulier selon l'une quelconque ou plusieurs des revendications précédentes, comprenant les étapes suivantes :
- fabrication de la roue de compresseur (1) avec plusieurs pales de compresseur (3) en plastique,
- réalisation d'au moins une métallisation (6) disposée notamment sur l'une des pales de compresseur (3), la roue de compresseur (1) étant fabriquée en un plastique avec un complexe organométallique, et le complexe organométallique étant activé pour former la métallisation (6) par parties par apport d'énergie.

7. Procédé selon la revendication 6, **caractérisé en ce que** le complexe organométallique est activé pour former la métallisation (6) par parties par irradiation laser.

8. Procédé selon l'une quelconque des revendications précédentes 6 ou 7, **caractérisé en ce que** la roue de compresseur (1), après l'activation par parties du complexe organométallique, est plongée dans un bain galvanique afin de doter la métallisation (6) d'un revêtement métallique supplémentaire.
